# DEMANDE DE BREVET EUROPEEN

(11) **EP 0 874 345 A1**
(43) Date de publication de la demande: **28.10.1998**
(21) Numéro de dépôt: 97401741.0
(22) Date de dépôt: 21.07.1997
(51) Int. Cl.: G09B 21/00, G06F 3/00

(54) **Procédé et dispositif de navigation pour les aveugles dans une interface graphique d'ordinateur**

(30) Priorité: 21.04.1997 FR 9704873
(71) Demandeur: Montane, Ioan, F-75019 Paris (FR)
(72) Inventeur: Montane, Ioan, F-75019 Paris (FR)
(74) Mandataire: Serin, Jean-Pierre

(57) **Abrégé**

Selon le procédé, les objets, mots ou graphismes, de l'environnement graphique, sont représentés par un mot à chaque caractère duquel est associée une fonction dynamique définie selon la position de ce caractère dans le mot. Le mot est constitué par une désignation de l'objet dans l'interface graphique à laquelle on adjoint dans le cas ou l'on travaille avec un appareil braille, un ou plusieurs caractère(s) supplémentaire(s) pour indiquer, par lecture directe, des caractéristiques de l'objet. Les fonctions sont affectées à des touches (8) correspondant à chacune des cellules braille (7) d'une plage braille (5), dans lesquelles sont affichés les caractères du mot. L'activation des touches permet à une personne aveugle d'obtenir le même résultat qu'avec une souris. Un clavier de navigation permet de travailler avec un système vocal, chaque touche du clavier de navigation correspondant à une fonction exclusive lorsque l'un des mots énoncés par le système vocal a été marqué au moyen d'une touche.

## Description

L'invention concerne un procede et un dispositif de navigation pour les aveugles dans une interface graphique d'ordinateur.

De nos jours, l'ordinateur et plus particulièrement le micro-ordinateur, est devenu un outil de travail indispensable dans les entreprises. Sa penetration dans les postes de travail necessitant des formations a différents niveaux a rendu nécessaire la simplification de l'accès aux différentes fonctions des logiciels utilisés en les rendant de plus en plus conviviaux, c'est-à-dire en permettant à l'utilisateur d'accéder à ces fonctions avec un minimum de formation sur la machine et son logiciel, en utilisant des moyens d'identification simple. On a ainsi abouti aux interfaces graphiques qui présentent à l'écran les symboles de ces fonctions non seulement sous forme littérale avec accès par combinaison de touches mais également sous forme graphique, le tout avec une disposition appropriée pour en faciliter le repérage et un accès possible au moyen d'un dispositif de pointage (curseur déplacé avec les touches de direction du clavier, souris ou analogue).

On a déjà depuis longtemps prévu des dispositifs permettant aux aveugles de travailler sur des ordinateurs, en substituant aux touches correspondant aux différents caractères des claviers classiques, des touches disposées de telle façon qu'elles permettent à un opérateur aveugle de composer facilement les mêmes caractères. De même, pour la lecture des documents ou le contrôle du texte en train d'être frappé, une plage d'affichage tactile braille, généralement associée au clavier braille dans une même unité, ou appareil braille, a été substituée à l'écran.

Un tel appareil braille interactif est décrit dans le brevet français 93 10.326. Cet appareil constitué par un micro-ordinateur relié à l'ordinateur de travail par un port série ou parallèle, comprend un clavier de touches, dont la combinaison sert à composer en braille des caractères, ainsi que des touches de fonction. A l'avant du clavier se trouvent des modules tactiles définissant ensemble une rangée de cellules brailles modifiables, l'émergence de micro-plots dans les trous des cellules étant commandée par le système. Au-dessus de chaque cellule braille, se trouve une touche actionnant un micro-interrupteur. Les cellules brailles comportent en général huit plots. Si par exemple lors de la relecture de sa frappe, l'opérateur désire corriger un caractère ou en insérer un, il appuie sur la touche située au-dessus de la cellule affichant le caractère à remplacer, ou à décaler, et le curseur se place à cet endroit.

L'usage de plus en plus répandu et certainement totalement généralisé dans un proche avenir, des interfaces graphiques d'écran, s'il a simplifié le travail des personnes clairvoyantes, pose un problème pour les personnes aveugles car ni les symboles graphiques ni la disposition de l'écran ne peuvent être perçus directement par l'opérateur aveugle. Or celui-ci doit pouvoir travailler dans un environnement de personnes clairvoyantes, et avec les mêmes moyens, exception faite du dispositif clavier-lecteur tactile indispensable.

La principale difficulté d'une personne aveugle pour naviguer dans une interface graphique est que sur une plage braille on peut afficher vingt à quatre vingt caractères, donc deux à huit mots de neuf caractères, de sorte que sur une interface graphique d'un ordinateur on se retrouve avec un ordre de deux cents à cinq cents mots.

L'object de l'invention est donc de fournir un procédé et un dispositif pour donner à un aveugle la possibilité de naviguer dans une interface graphique en lui permettant de precevoir les informations fournies par les objects représentés sur l'écran graphique et d'en utiliser les fonctions associées.

Ce but est atteint selon l'invention avec un procédé dans lequel des objects, mots ou graphismes, représentent les éléments de l'environnement graphique, chacun de ces objects, appartenant ou non à un groupe d'objects, étant représenté par un mot, ce procédé étant caractérisé en ce que le mot est constitué par la désignation de l'objet dans l'interface graphique, une abréviation de cette désignation ou un code associé et que l'on associe à chaque mot une série de fonctions dynamiques correspondant à des actions à effectuer dans l'interface graphique.

Afin d'accélérer la navigation par arborescence dans un interface graphique d'ordinateur, plusieurs objets de l'interface graphique, nommés pour la circonstance objets élémentaires, sont groupés dans un ou plusieurs objets complexes, pouvant être à leur tour groupés dans un autre objet complexe, en fonction de leur caractère de similitude, de parenté ou de voisinage ou de leur collaboration dans l'accomplissement d'une tâche particulière.

Selon une première forme de réalisation de l'invention, le mot peut être lu en braille sur une plage tactile et on associe à chaque caractère du mot une fonction dynamique définie selon la position de ce caractère dans le mot, repérée à partir d'un ou plusieurs caractères de référence.

Dans ce contexte, on désigne par fonction dynamique une fonction affectée non à un seul caractère donné, a ou b, ... etc. ..., (fonction statique) mais à tout caractère occupant une place prédéterminée dans un mot.

Selon l'invention, on adjoint au mot un ou plusieurs caractère(s) supplémentaire(s) utilisé(s) pour indiquer, par lecture directe, l'attribut du mot, c'est à dire la nature et/ou l'état et/ou les caractéristiques de l'objet, la forme compactée ou décompactée et le type, élémentaire ou complexe.

Selon une autre caractéristique de l'invention, on affecte à l'un des caractères du mot affiché, une fonction permettant d'afficher par activations successives la désignation codée de l'objet, sa désignation abrégée et sa désignation complète.

Selon une autre caractéristique de l'invention, on affecte à l'un des caractères du mot affiché une fonction qui est un order d'affichage de la nature et/ou l'état et/ou les caractéristiques de l'objet désigné (normal, sélectionné, indisponible, ...).

Selon une autre caractéristique de l'invention, on affecte à l'un des caractères du mot, une fonction qui est un order d'exécution d'une fonction de l'interface graphique.

Selon une autre caractéristique de l'invention, l'affichage est structuré en une liste de mots représentant une famille d'objets ou groupes d'objets déterminés, précédée d'un mot indiquant le début de la liste et suivie d'un mot indiquant la fin de la liste.

Selon une autre caractéristique de l'invention, on attache à des caractères du mot, des fonctions permettant de décompacter les objets complexes en objets élémentaires, ou en d'autres objets complexes, et respectivement de les recompacter, globalement ou par catérgorie d'objets.

Selon une autre caractéristique de l'invention, on affecte à une paire de caractères du mot une paire de fonctions qui sont un ordre de déplacement de la sélection vers un autre mot représentant un autre objet de l'interface graphique situé en haut ou en bas, ou bien à droite ou à gauche.

Selon une seconde forme de réalisation de l'invention. les mots représentant les objets sont prononcés par un système vocal et un mot peut être marqué lorsqu'il est prononcé ou immédiatement après sa prononciation et on peut exécuter à partir de l'objet du mot marqué une série de fonctions dynamiques à l'aide d'un clavier, une souris ou analogue.

Selon l'invention, on affecte au mot prononcé et/ou marqué une fonction permettant d'énoncer par activations successives la désignation codée de l'objet, sa désignation abrégée et sa désignation complète. On affecte au mot prononcé et marqué une fonction qui est un order d'énoncer la nature et/ou l'état et/ou les caractéristiques de l'objet désigné (normal, sélectionné, indisponible, ...).

Selon l'invention, on affecte également au mot prononcé et/ou marqué une fonction qui est un ordre d'exécution d'une fonction de l'interface graphique. L'énonciation est structurée en une liste de mots représentant un famille d'objets ou groupes d'objets déterminés, précédée d'un mot indiquant le début de la liste et suivie d'un mot indiquant la fin de la liste.

On attache également au mot, des fonctions permettant de décompacter les objets complexes en objets élémentaires, ou en d'autres objets complexes, et respectivement de les recompacter, globalement ou par catégorie d'objets.

Une paire de fonctions est également affectée au mot prononcé, fonctions qui sont un ordre de déplacement de la sélection vers un autre mot représentant un autre objet de l'interface graphique situé en haut ou en bas, ou bien à droite ou à gauche sur l'écran.

L'invention concerne également un dispositif pour la mise en oeuvre du procédé.

Selon une première forme de réalisation, le dispositif est constitué par un appareil braille pourvu d'un clavier permetttant la saisie de caractères braille, d'une plage d'affichage tactile, constituée d'une rangée de cellules brailles modifiables pour la lecture des informations affichées à l'écran et d'une rangée de touches interactives correspondant chacune à une cellule braille et située au-dessus de celle-ci, ce dispositif étant caractérisé en ce que chaque touche interactive située au-dessus d'une cellule braille correspond à une fonction liée à la position dans le mot du caractère affiché dans ladite cellule braille, ladite touche interactive correspondante changeant de fonction lorsque le mot est déplacé sur la plage de cellules brailee, pour permettre l'attribution de fonctions aux caractères des mots non encore affichés de sorte que ladite fonction corresponde toujours à la même position du caractère dans le mot affiché, quelles que soient sa longueur et sa place dans la rangée de cellules.

Selon une forme particulière de cette réalisation de l'invention, le dispositif, affiche à l'écran de l'ordinateur une simulation des cellules braille avec des touches interactives associées aux caractères des mots affichés pour permettre à un clairvoyant de suivre l'activité de la personne aveugle sur son appareil braille. La couleur de l'image a l'écran des touches interactives est en corrélation avec la fonction affectée à un moment donné aux touches correspondantes et change en réponse à l'activation de ces touches.

Selon une seconde forme de réalisation de l'invention, le dispositif présente un clavier de navigation pourvu de touches interactives, relié à un ordinateur équipé d'un clavier de travail, braille ou classique, ce clavier de navigation comporte au moins une touche servant à marquer le mot énoncé ou qui vient d'être énoncé, chacune des autres touches dudit clavier de navigation étant une touche interactive qui correspond à l'une des fonctions dynamiques liées au mot qui vient d'être marqué, ladite fonction correspondant toujours à la même touche.

Les touches du clavier de navigation sont regroupées par fonctions à action comparable mais exclusives et toutes les touches d'un même groupe sont liées à des fonctions exclusives de manière à être activées au moyen d'un même doigt par pression sur les touches correspondantes sans avoir à bouger les mains du dessus du clavier. Les touches correspondant à des fonctions liées au mot provoquent le marquage du mot avant l'activation de la fonction qui leur est affectée si la touche de marquage n'a pas été actionnée auparavant.

Selon une forme particulière de l'invention, le clavier de navigation comporte un élément de forme convexe semi-sphérique pour l'appui de la paume de la main, cet élément présentant une proéminence à son sommet, qui permet à l'utilisateur de repérer rapidement la position de sa main par rapport au clavier de navigation.

L'invention va être maintenant expliquée plus en détails au moyen d'exemples de réalisation représentés sur le dessin annexé sur lequel :
La figure 1 représente une première forme de réalisation du dispositif selon l'invention utilisant l'écriture et la lecture braille ainsi que le système vocal;
La figure 2 représente une deuxième forme de réalisation du dispositif selon l'invention n'utilisant que le système vocal ;

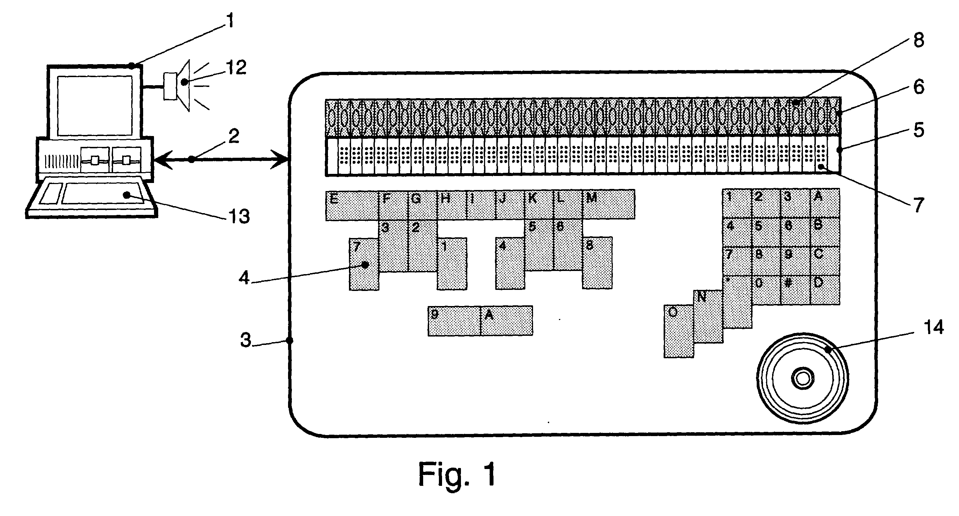

La figure 1 représente schématiquement un ordinateur 1 équipé d'un appareil braille 3. L'appareil braille 3 est constitué d'une console, pourvue d'un clavier braille 4 adapté pour l'écriture braille et d'une plage de lecture braille 5.

L'appareil braille est relié au micro-ordinateur 1 ou analogue par une liaison série ou parallèle 2.

Au-dessus du clavier 4, sur le boîtier de l'appareil 3, se trouve la plage de lecture braille 5. Cette plage est constituée par une série de dispositifs tactiles comportant, dans l'exemple, une rangée de 40 cellules braille 7 modifiables pourvues de perforations à travers lesquelles dépassent des plots soulevés pour composer le caractère braille correspondant. L'appareil comprend en outre une rangée b de touches interactives, disposée au-dessus des cellules braille et en nombre égal. Chaque touche interactive 8 de la rangée 6 est située immédiatement au-dessus d'une cellule 7 de la rangée 5.

Dans le cas d'un travail effectué au moyen d'un logiciel fonctionnant dans une interface graphique, les informations et les fonctions ne sont plus seulement citées par un menu que l'on peut afficher mais représentées aussi par des symboles répartis sur l'écran en des endroits choisis pour leur position ergonomique et /ou esthétique dans l'ensemble affiché et sont activées par pointage, au moyen d'une souris ou analogue, suivi d'une pression sur un bouton du système de pointage. Le repérage visuel du symbole ne pouvant être effectué par une personne aveugle, des informations sur les objets et les fonctions qui leur sont affectées doivent être affichées sur le dispositif tactile 5.

On distingue plusieurs types d'objets :
- Les objets élémentaires qui sont des objets définis dans l'interface graphique, comme par exemple les boutons, la barre de tâches, des fonctions, des fenêtres, etc. .
   Afin de pouvoir accélérer, pour une personne aveugle, l'avancement dans la navigation, on peut concentrer, dans l'exemple de réalisation, plusieurs objets élémentaires ayant entre eux une parenté, en un seul objet, à savoir un objet générique, un objet de groupement logique et un objet composée;
- Les objets génériques représentant des ensembles d'objets de structure formelle identiques c'est-à-dire de plusieurs objets élémentaires de même nature, par exemple des boutons ;
- les objets de groupement logique, représentant des ensembles d'objets élémentaires et /ou complexes contribuant à une même opération, par exemple "ouvrir fichier" amène à choisir "disque", "répertoire", "liste des fichiers" et enfin "OK" ;
- les objets composés, décrivant un ensemble d'objets différents groupés dans un cadre quelconque, par exemple pour un écran donné : "Barre de titre", constituée d'un menu système, d'un titre et de trois boutons de redimensionnement de la fenêtre.

Les objets génériques, les objets composés et les objets de groupement logique constituent l'ensemble des objets complexes.

Selon l'invention, chaque objet correspondant à une information de type décrit plus haut, est désigné par un mot. Ce mot est soit la désignation complète de l'information, soit une désignation abrégée de cette information, soit enfin un code correspondant à cette information. L'une de ces trois formes d'expression de l'information peut être obtenue par actionnement d'une touche interactive de fonction 8 de l'appareil braille 3. Par exemple, un utilisateur non habitué choisira le nom complet. Après un temps d'apprentissage, il pourra utiliser le nom abrégé et enfin le code. Ces derniers ont la même longueur pour toutes les informations proposées dans la plage de lecture braille 5. Dans l'exemple de réalisation, il s'agit d'un code de cinq letters. Le choix du nom abrégé ou du code permet à l'utilisateur de lire beaucoup plus vite qu'en lisant les noms complets.

Des fonctions dynamiques interactives sont affectées aux caractères du mot qui désigne l'objet. Chaque fonction correspond, pour toutes les informations, à un caractère de même rang, affiché sur l'appareil braille par une cellule 7 de la rangée 5. Lorsque les mots constituant la liste d'informations présents à un moment donné sur l'afficheur tactile 5 sont déplacés pour permettre la lecture de la séquence suivante de mots, les fonctions affectées à chaque caractère suivent ces caractères et se déplacent sur la rangée 6 de la même façon que les caractères sur la rangée 5. Le choix de l'une de ces fonctions s'effectue alors par actionnement de la touche interactive 8 de la rangée 6 située immédiatement au-dessus de la cellule braille 7 affichant le caractère dont le rang correspond à la fonction choisie.

A chaque nom d'objet affiché, on ajoute une letter, dans notre exemple à la fin. Cette lettre supplémentaire donne par sa lecture une indication sur la nature, l'état ou les caractéristiques de l'objet représenté par le mot. La lettre est dénommée par la suite "Caractère d'attribut" de l'objet. La touche située au-dessus du caractère d'attribut permet d'afficher par son actionnement lesdits attributs.

Dans le présent exemple de réalisation, la correspondance entre les lettres du mot affiché et les touches interactives est représentée sur le tableau 1 suivant :

**Tableau 1**

| | | | | | | | | |
|---|---|---|---|---|---|---|---|---|
| Fonction de la touche interactive associée au caractère braille | Fa | Fb | Fc | Fd | Fe.... | Fx | Fy | Fz |
| Caractère d'un mot | a | b | c | d | e..... | x | y | z |

Les fonctions représentées sont les suivantes :
Fa : fonction "Loupe mot" ; elle permet par activation successive d'afficher le nom de l'objet sous forme codée, abrégée ou complète.
Fb : fonction de déplacement de la sélection vers un mot représentant un objet en bas ou à droite (sur l'écran) de l'objet actuellement sélectionné.
Fc : fonction de déplacement de la sélection vers un mot représentant un objet en haut ou à gauche (sur l'écran) de l'objet actuellement sélectionné.
Fd : fonction de déplacement de la sélection vers un mot représentant un objet situé le plus en haut ou le plus à gauche (sur l'écran) de l'objet actuellement sélectionné.
Fe : fonction de recompactage des objets complexes. ....
Fx : fonction permettant d'exécuter la fonction de l'interface graphique réalisée par le clic droit de la souris.
Fy : fonction "loupe attribut", permettant d'afficher en clair l'attribut (nature état et/ou caractéristiques) de l'objet.
Fz : fonction permettant d'exécuter la fonction de l'interface graphique réalisée par le clic gauche de la souris ou de décompacter les objets complexes en objets élémentaires.

Afin de permettre à un clairvoyant de suivre le travail de la personne aveugle, une simulation de l'afficheur braille et des touches interactives associées peut être représentée à l'écran. Dans ce cas, la couleur de l'image à l'écran des touches interactives est en corrélation avec leur fonction momentanée. L'actionnement d'une touche entraîne le changement de couleur de son image à l'écran afin d'indiquer au clairvoyant quelle touche a été actionnée et ainsi quelle fonction a été activée à un moment donné.

Le tableau 2 suivant représente des exemples de la fonction Fa ("loupe mot") du tableau 1 avec un exemple concret : "affichage"

**Tableau 2**

| | Général | Exemple |
|---|---|---|
| Complet | abcdef...wxyz | affichage.e_ |
| Abrégé | abcfxyz | affichg.e_ |
| Codé | acxyz | af.e_ |

abcdef... wxyz : mot désignant un objet de l'interface graphique.
abcdef...w : partie du mot représentant le nom complet de l'objet.
x : séparateur entre la partie nom de l'objet et l'attribut.
y : caractère décrivant l'attribut de l'objet ; ce caractère peut être :
   - e ou E pour un "objet élémentaire" ;
   - un chiffre n pour un objet complexe générique englobant n objets élémentaires;
   - c ou C pour un objet composé ;
   - g ou G pour un groupement logique.

Selon que l'on emploie une minuscule ou une majuscule, on peut indiquer si l'objet est dans un état "normal" ou un état différent de "normal" (par exemple "non accessible").
- z : séparateur entre deux mots successifs (dans l'exemple cité, un "_")`

Comme exemple de la fonction "loupe attribut", on peut citer pour un élément de la ligne, par exemple un mot d'un objet élémentaire à l'etat "normal" :
... soulg.e ...
en actionnant la fonction Fy sur soulg.e, on obtient sur la plage braille :
... soulg-bouton normal

Cela signifie que l'attribut indique qu'il s'agit d'un bouton à l'état normal.

A tout moment dans le processus de navigation, dans une interface graphique sur l'afficheur braille, les objets apparaissent sur la plage braille précédés d'un mot indiquant le début de la liste et suivis d'un mot indiquant la fin de la liste. Le mot du début de liste indique la catégorie d'origine (le parent) des mots de la liste. Le mot de fin de liste sert à recompacter les mots de la liste en actionnant les touches interactives associées pour réduire le nombre d'éléments de la liste en remplaçant des groupes de mots par une information de synthèse (générique, groupe logique, composée).

Les objets représentés par les mots de la liste peuvent eux mêmes être une autre liste d'objets. Un exemple d'un tel affichage est fourni par le tableau 3 :

**Tableau 3**

| | DEBUT | ELEMENTS DE LA LISTE | FIN |
|---|---|---|---|
| Générique | groupe | objetA objetB objetC, ... | fin |
| Exemple | barou.c: | nom.e boutn.3 txted.2 ... | Tegc |

groupe : début de liste.
objetA ... : objets de la liste.
fin : fin de la liste.
barou.c : barre d'outils regroupant les objets présentés dans la liste, avec attribut c pour "composé" à l'état "normal".
nom.e : objet "nom" avec attribut e comme élémentaire.
boutn.3 : objet "boutons" avec attribut 3 indiquant qu'il s'agit d'un objet générique, c'est-à-dire regroupant 3 boutons.
txted.2 : objet texte éditable avec attribut générique 2 (englobant deux textes éditables).
Teg.c : objet particulier marquant la fin de la liste.

Lorsque l'utilisateur aveugle se trouve en présence d'une liste, il choisit celui des mots de la liste qui lui semble indiquer le chemin à suivre pour trouver ce qu'il cherche. Si par exemple il désire trouver un bouton de fonction et que la liste lui indique par le mot boutn.3 qu'il y a des boutons (boutn) et que ceux-ci sont au nombre de trois (attribut 3), il va actionner la touche située au dessus de l'espace après "3" à laquelle est affectée la fonction Fz (voir tableau 1), c'est-à-dire développer ou décompacter le mot générique (voir tableau 3) en mots élémentaires (ici, énumération des trois boutons). Puis, il choisira celui des boutons qu'il veut utiliser et actionnera la touche nécessaire.

Par exemple, les trois boutons peuvent être :
barré.e : objet bouton réalisant la fonction "caractères barrés", avec e pour élémentaire.
italq.e : objet bouton réalisant la fonction "mise en italique des caractères", avec e pour élémentaire.
soulg.e : objet bouton réalisant la fonction "caractères soulignés", avec e pour élémentaire.

Le mot Tegc (voir tableau 3) de fin de liste permet, par les fonctions associées de recompacter les objets une fois décompactés :

Fonction dynamique sur T : de recompacter tous les objets de la liste décompactée

Fonction dynamique sur e : d'effecteur la même tâche mais uniquement pour les objets élémentaires ; par exemple celle de décompacter par l'actionnement de la fonction Fz de boutn.3 ;

Fonction dynamique sur g : d'effectuer la même tâche mais uniquement pour les groupements logiques.

Fonction dynamique sur c : d'effectuer la même tâche mais uniquement pour les objets composés.

Les listes contiennent également un mot permettant de passer de la lecture des noms d'objets de l'interface graphique à la feuille de travail, texte pour un traitement de texte, feuille de calcul pour un tableur, ...etc....

Le travail dans cette feuille s'effectue alors comme auparavant avec un logiciel sans interface graphique jusqu'à ce que l'appel à une fonctionnalité de cet interface graphique soit à nouveau nécessaire. L'actionnement d'une touche permet de passer alternativement de la partie de l'écran réservée au travail à la partie de l'écran donnant accès aux fonctionnalités de l'écran graphique pour y pouvoir naviguer.

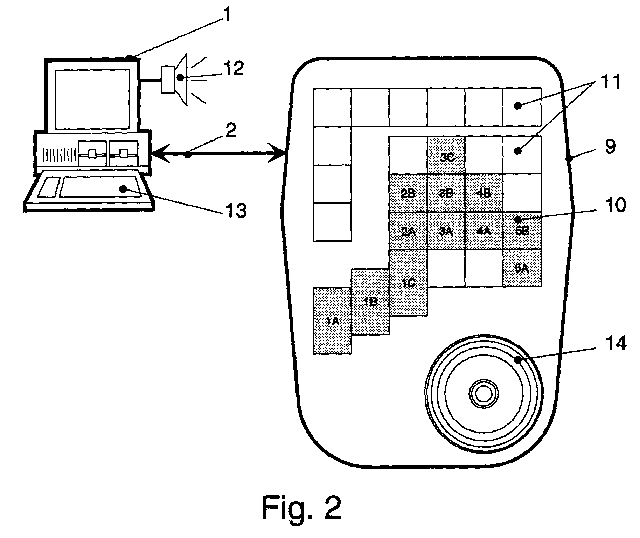

La figure 2 représente la deuxième forme de réalisation de l'invention, dans laquelle les mots représentant les objets de l'interface graphique sont prononcés par un système vocal de l'ordinateur au moyen d'un haut-parleur 12.

De la même façon que dans le premier exemple de réalisation, les mots relatifs aux objets de l'interface graphique sont réunis en listes. Mais au lieu d'être affichées sur une plage braille, ces listes sont énoncées par le système. La correspondance entre un caractère du mot et une touche de fonction donnée, dans la première forme de réalisation, est ici remplacée par une touche de marquage et des touches de navigations.

Le dispositif comporte un clavier de navigation 9 pourvu de touches de navigation 10 ainsi que de touches supplémentaires 11 non décrites ici.

Les touches de navigation sont regroupées ergonomiquement selon des catégories logiques, chaque groupe comportant des fonctions de même type et exclusives. Chacun des cinq doigts de la main actionne l'une des touches 10 de chacun des cinq groupes du clavier 9.

Selon l'exemple de réalisation (clavier de navigation pour droitiers), les touches 1A à 1 C sont des touches manipulées par le pouce et correspondent respectivement aux fonctions suivantes :
touche 1A : prononciation du mot de début de ligne ;
touche 1B : énonciation des mots des éléments de la ligne ;
touche 1C : marquage et prononciation du mot marqué.

Les touches 2A et 2B sont des touches manipulées par l'index et correspondent respectivement aux fonctions suivaantes :
touche 2A : clic du bouton droit de la souris ;
touche 2B : clic du bouton gauche de la souris.

Les touches 3A à 3 C sont des touches manipulées par le majeur et correspondent respectivement aux fonctions suivantes :
touche 3A : prononciation du mot représentant l'objet en bas ou à droite
touche 3B : prononciation du mot représentant l'objet en haut ou à gauche
touche 3C : prononciation du mot représentant l'objet situé le plus haut ou le plus à gauche.

Les touches 4A et 4B sont des touches manipulées par l'annulaire et correspondent respectivement aux fonctions suivantes :
touche 4A : prononciation du mot complet (loupe mot);
touche 4B : prononciation de l'attribut (loupe attribut).

Les touches 5A et 5B sont des touches manipulées par l'auriculaire et correspondent respectivement aux fonctions suivantes :
touche 5A : compression et prononciation du mot correspondant à l'objet complexe;
touche 5B : décompression et énonciation des mots correspondant aux objets élémentaires constituant l'objet complexe.

Le travail à accomplir sur l'ordinateur s'effectue au moyen d'un clavier usuel 13. Un dactylographe n'ayant pas besoin de regarder son clavier, un aveugle s'habitue aussi facilement à lui. La relecture du texte frappé se fait au moyen du système vocal, par l'actionnement de l'une des touches de fonction 11.

Pour la navigation dans l'interface graphique, l'utilisateur actionne les touches 1A et 1B appropriées pour écouter l'énonciation des différents objets par le haut parleur 12. Lorsqu'il entend le mot correspondant à l'objet qu'il recherche, il appuie sur la touche 1C pour marquer l'objet. A partir de l'objet marqué, il actionne les fonctions dynamiques déjà citées et ainsi de suite jusqu'à ce qu'il arrive à son but.

De même, lors de la relecture du texte frappé, la correction ou l'insertion (ou l'effacement) d'un ou plusieurs mots se fait par marquage de celui-ci ou de ceux-ci au moyen de la touche 1C

Afin d'aider au repérage des touches du clavier de navigation et faciliter l'orientation de la main, un appui, sous forme d'une demi-sphère ou toute autre forme appropriée pour tenir dans la paume de la main, est disposé sur le clavier de navigation. Cet appui comporte une proéminence à son sommet. Cette proéminence permet le positionnement rapide des doigts par rapport aux touches de navigation. On exploite ainsi la grande sensibilité à l'attouchement de la paume de la main.

Sur la figue 1 l'appareil braille 3 a été combine avec un clavier de navigation selon la figure 2. Cette forme de réalisation permet a un dactylographe aveugle de travailler en braille, ou en vocal, alternativement, ou les deux à la fois.

## Revendications

1. Procédé de navigation dans une interface graphique afin de trouver des éléments déterminés et de commander l'exécution de fonctions déterminées, dans laquelle des objets, mots ou graphismes, représentent les éléments de l'environnement graphique, chacun de ces objets, appartenant ou non à un groupe d'objets, étant représenté par un mot, caractérisé en ce que le mot est constitué par la désignation de l'objet dans l'interface graphique, une abréviation de cette désignation ou un code associé et que l'on associe à chaque mot une série de fonctions dynamiques correspondant à des actions à effectuer dans l'interface graphique.

2. Procédé selon la revendication 1, caractérisé en ce que, plusieurs objets de l'interface graphique, nommés pour la circonstance objets élémentaires, sont groupés dans un ou plusieurs objets complexes, pouvant être à leur tour groupés dans un autre objet complexe, en fonction de leur caractère de similitude, de parenté ou de voisinage ou de leur collaboration dans l'accomplissement d'une tâche particulière.

3. Procédé selon l'une quelconque des revendications 1 et 2, caractérisé en ce que, le mot pouvant être lu en braille sur une plage tactile, on associe à chaque caractère du mot l'une des fonctions dynamiques définie selon la position du caractère dans le mot repérée à partir d'un ou plusieurs caractères de référence.

4. Procédé selon l'ensemble des revendications 1 à 3, caractérisé en ce qu'on adjoint au mot un ou plusieurs caractère(s) supplémentaire(s) pour indiquer, par lecture directe, l'attribut du mot, c'est à dire la nature et/ou l'état et/ou les caractéristiques de l'objet, élémentaire ou complexe.

5. Procédé selon l'une quelconque des revendications 1 à 4, caractérisé en ce que l'on affecte à l'un des caractères du mot affiché, une fonction permettant d'afficher par activations successives la désignation codée de l'objet, sa désignation abrégée et sa désignation complète.

6. Procédé selon l'une quelconque des revendications 1 à 4, caractérisé en ce que l'on affecte à l'un des caractères du mot affiché une fonction qui est un ordre d'affichage de la nature et/ou l'état et/ou les caractéristiques de l'objet désigne (normal, sélectionné, indisponible, ...).

7. Procédé selon l'une quelconque des revendications 1 à 6, caractérisé en ce que l'on affecte à l'un des caractères du mot, une fonction de l'interface graphique.

8. Procédé selon l'une quelconque des revendications 1 à 4, caractérisé en ce que l'affichage est structuré en une liste de mots représentant une famille d'objets ou groupes d'objets déterminés, précédée d'un mot indiquant le début de la liste et suivie d'un mot indiquant la fin de la liste.

9. Procédé selon l'une quelconque des revendications précédentes, caractérisé en ce que l'on attache à des caractères du mot, des fonctions permettant de décompacter les objets complexes en objets élémentaires, ou en d'autres objets complexes, et respectivement de les recompacter, globalement ou par catégorie d'objets.

10. Procédé selon l'une quelconque des revendications 1 à 4, caractérisé en ce que l'on affecte à une paire de caractères du mot une paire de fonctions qui sont un ordre de déplacement de la sélection vers un autre mot représentant un autre objet de l'interface graphique situé en haut ou en bas, ou bien à droite ou à gauche sur l'écran.

11. Procédé selon l'une quelconque des revendications 1 et 2, caractérisé en ce que les mots représentant les objets sont prononcés par un système vocal, en ce qu'un mot peut être marqué lorsqu'il est prononcé ou immédiatement après sa prononciation et en ce qu'on peut exécuter à partir de l'objet du mot marqué une série de fonctions dynamiques à l'aide d'un clavier, une souris ou analogue.

12. Procédé selon l'ensemble des revendications 1, 2 et 11, caractérisé en ce que l'on affecte au mot prononcé ou marqué une fonction permettant d'énoncer par activations successives la désignation codée de l'objet, sa désignation abrégée et sa désignation complète.

13. Procédé selon l'ensemble des revendications 1,2 et 11, caractérisé en ce que l'on affecte au mot prononcé ou marqué une fonction qui est un ordre d'énoncer la nature et/ou l'état et/ou les caractéristiques de l'objet désigne (normal, sélectionné, indisponible, ...).

14. Procédé selon l'ensemble des revendications 1, 2 et 11, caractérisé en ce que l'on affecte au mot prononcé ou marqué une fonction qui est un ordre d'exécution d'une fonction de l'interface graphique.

15. Procédé selon l'ensemble des revendications 1, 2 et 11, caractérisé en ce que l'énonciation est structurée en une liste de mots représentant une liste d'objets ou groupes d'objets déterminés, précédée d'un mot indiquant le début de la liste et suivie d'un mot indiquant la fin de la liste.

16. Procédé selon l'ensemble des revendications 1, 2 et 11, caractérisé en ce que l'on attache au mot, prononcé ou marqué, des fonctions permettant de décompacter les objets complexes en objets élémentaires, ou en d'autres objets complexes, et respectivement de les recompacter, globalement ou par catégorie d'objets.

17. Procédé selon l'ensemble des revendications 1, 2 et 11, caractérisé en ce que l'on affecte au mot, prononcé ou marqué, une paire de fonctions qui sont un ordre de déplacement de la sélection vers un autre mot représentant un autre objet de l'interface graphique situé en haut ou en bas, ou bien à droite ou à gauche sur l'écran.

18. Dispositif pour la mise en oeuvre du procédé selon l'une quelconque des revendications 1 à 10, présentant un appareil braille (3) pourvu d'un clavier (4) permettant la saisie de caractères braille, d'une plage d'affichage tactile (5), constituée d'une rangée de cellules brailles (7) modifiables pour la lecture des informations affichées à l'écran et d'une rangée (6) de touches interactives (8) correspondant chacune à une cellule braille (7) et située au-dessus de celle-ci, caractérisé en ce que chaque touche interactive (8) située au-dessus d'une cellule braille (7) correspond à une fonction liée à la position dans le mot du caractère affiché dans ladite cellule braille (7), ladite touche interactive (8) correspondante changeant de fonction lorsque le mot est déplacé sur la plage de cellules braille (5), pour permettre l'attribution de fonctions aux caractères des mots non encore affichés de sorte que ladite fonction corresponde toujours à la même position du caractère dans le mot affiché, quelles que soient sa longueur et sa place dans la rangée (5) de cellules.

19. Dispositif selon la revendication 18, affichant à l'écran de l'ordinateur une simulation des cellules braille (7) avec des touches interactives (8) associées aux caractères des mots affichés pour permettre à un clairvoyant de suivre, sur l'écran de l'ordinateur (1), l'activité de la personne aveugle sur son appareil braille (3), caractérisé en ce que la couleur de l'image à l'écran des touches interactives est en corrélation avec la fonction affectée à un moment donné aux touches (8) correspondantes et change en réponse à l'activation de ces touches.

20. Dispositif pour la mise en oeuvre du procédé selon l'une quelconque des revendications 1, 2 et 11 à 17, présentant un clavier de navigation pourvu de touches interactives, relié à un ordinateur équipé d'un clavier de travail, braille ou classique, caractérisé en ce que le clavier de navigation comporte au moins une touche servant à marquer le mot énoncé ou qui vient d'être énoncé, chacune des autres touches dudit clavier de navigation étant une touche interactive qui correspond à l'une des fonctions dynamiques liées au mot qui vient d'être marqué, ladite fonction correspondant toujours à la même touche.

21. Dispositif selon la revendication 20, caractérisé en ce que les touches du clavier de navigation sont regroupées par fonctions à action comparable et que toutes les touches d'un même groupe sont liées à des fonctions exclusives de manière à être activées au moyen d'un même doigt par pression sur les touches correspondantes.

22. Dispositif selon l'une quelconque des revendications 20 et 21, caractérisé en ce que les touches correspondant à des fonctions liées au mot provoquent le marquage du mot avant l'activation de la fonction qui leur est affectée si la touche de marquage n'a pas été actionnée auparavant.

23. Procédé selon l'une quelconque des revendications 20 à 22, caractérisé en ce que le clavier de navigation comporte un élément de forme convexe semi-sphérique pour l'appui de la paume de la main, cet élément présentant une proéminence à son sommet, qui permet à l'utilisateur de repérer rapidement la position de sa main par rapport au clavier de navigation.
